## Europäisches Patentamt

## European Patent Office

## Office européen des brevets

(11) Numéro de publication: **0 177 384**
**B1**

(12) # FASCICULE DE BREVET EUROPÉEN

(45) Date de publication du fascicule du brevet:
**14.12.88**

(51) Int. Cl.⁴: **G 01 M 3/16**

(21) Numéro de dépôt: **85401681.3**

(22) Date de dépôt: **23.08.85**

(54) Dispositif de détection et de localisation d'entrée d'eau pour flute marine.

(30) Priorité: **31.08.84 FR 8413510**

(43) Date de publication de la demande:
**09.04.86 Bulletin 86/15**

(45) Mention de la délivrance du brevet:
**14.12.88 Bulletin 88/50**

(84) Etats contractants désignés:
**DE GB NL**

(56) Documents cité:
**BE-A-899 980**
**FR-A-2 509 053**
**US-A-4 455 530**

**PATENTS ABSTRACTS OF JAPAN, vol 5, no. 77 (P-62) 749 , 21 mai 1981; & JP - A - 56 24542 (TATEISHI DENKI K.K.) 09-03-1981**
**PATENTS ABSTRACTS OF JAPAN, vol. 8, no. 204 (P-301) 1641 , 18 septembre 1984; & JP - A - 59 88634 (HITACHI SEISAKUSHO K.K.) 22-05-1984**

(73) Titulaire: **THOMSON- CSF, 173, Boulevard Haussmann, F-75379 Paris Cédex 08 (FR)**

(72) Inventeur: **Billet, Daniel THOMSON- CSF, SCPI 173, bld Haussmann, F-75379 Paris Cedex 08 (FR)**
Inventeur: **Cesarini, Jean- François THOMSON- CSF, SCPI 173, bld Haussmann, F-75379 Paris Cedex 08 (FR)**

(74) Mandataire: **Desperrier, Jean- Louis, THOMSON- CSF SCPI 19, avenue de Messine, F-75008 Paris (FR)**

EP 0 177 384 B1

## Description

La présente invention se rapporte aux dispositifs qui permettent de détecter les infiltrations d'eau au niveau des jonctions reliant les tronçons d'une flûte marine. Elle permet également de localiser la jonction défectueuse.

Les flûtes marines sont des antennes acoustiques de grande longueur, plusieurs centaines de mètres, tractées par un véhicule porteur et permettant l'écoute passive des bruits sous-marins. Elles permettent la détection des navires et des sous-marins. Certaines servent également pour la prospection sismique sous-marine.

Une telle flûte est constituée de tronçons de plusieurs dizaines de mètres de longueur comportant des capteurs et reliés entre eux au moyen de jonctions. Ces jonctions, qui doivent résister à une traction de plusieurs tonnes, constituent évidemment un point faible par lequel une entrée d'eau peut se produire par la suite d'un défaut d'étanchéité. Ce défaut doit pouvoir être détecté et localisé "in situ" et en permanence, de manière à pouvoir en tenir compte au niveau des informations fournies.

Pour une telle flûte, il est connu du brevet français FR-A-2 509 053 de détecter une entrée d'eau au niveau de chaque jonction en détectant la tension parasite qui se crée entre un circuit fermé entourant les lignes d'alimentation de la connexion électrique et une ligne conductrice de retour reliée à la borne négative d'un générateur de tension continue; les lignes d'alimentation étant reliées à la borne positive.

Dans ce système, la tension parasite qui apparaît en cas d'entrée d'eau est continue, ce qui entraîne par électrolyse une "résistance de contact" conducteur-eau très mal définie pouvant varier de quelques centaines d'ohms à plusieurs dizaines de kiloohms. De ce fait, le courant de détection est mal connu et peut être insuffisant. De plus dans cette réalisation la détection est effectuée par des éléments optoélectroniques qui sont des éléments actifs, donc de fiabilité limitée, qu'il faut en outre protéger de la pression hydrostatique importante.

On sait également par les brevets US-A-4 455 530 et japonais JP-A-5 988 634 fabriquer un détecteur d'humidité formé par une feuille isolante flexible sur laquelle on a déposé des électrodes en forme de peignes interdigités. Sous l'effet de la présence d'eau, l'impédance entre ces électrodes diminue considérablement, ce qui permet de détecter cette présence.

On sait enfin par le brevet japonais JP-A-5 624 542 déterminer l'emplacement d'une fuite sur un réservoir en disposant sur celui-ci un ensemble de capteurs sensibles à l'humidité. Ces capteurs sont réunis par une ligne bifilaire et on détecte les capteurs dont l'impédance varie sous l'effet d'une telle fuite en émettant à l'une des extrémités de la ligne des impulsions brèves qui sont réfléchies par les capteurs dont l'impédance a varié. En mesurant le temps entre l'émission de l'impulsion et le retour de l'écho on localise le capteur concerné.

Pour pallier les inconvénients du système du brevet français n° 2 509 053 l'invention propose des dispositifs définis par les revendications 1 et 2.

D'autres particularités et avantages apparaîtront clairement dans la description suivante, faite à titre d'exemple non limitatif de l'invention en regard des figures annexées qui représentent:

- les figures 1 et 2, deux variantes de réalisation de capteurs selon l'invention;
- la figure 3, une vue en coupe d'une jonction de flûte munie de tels capteurs;
- la figure 4, un schéma des moyens de mesure permettant de surveiller les capteurs d'une flûte.

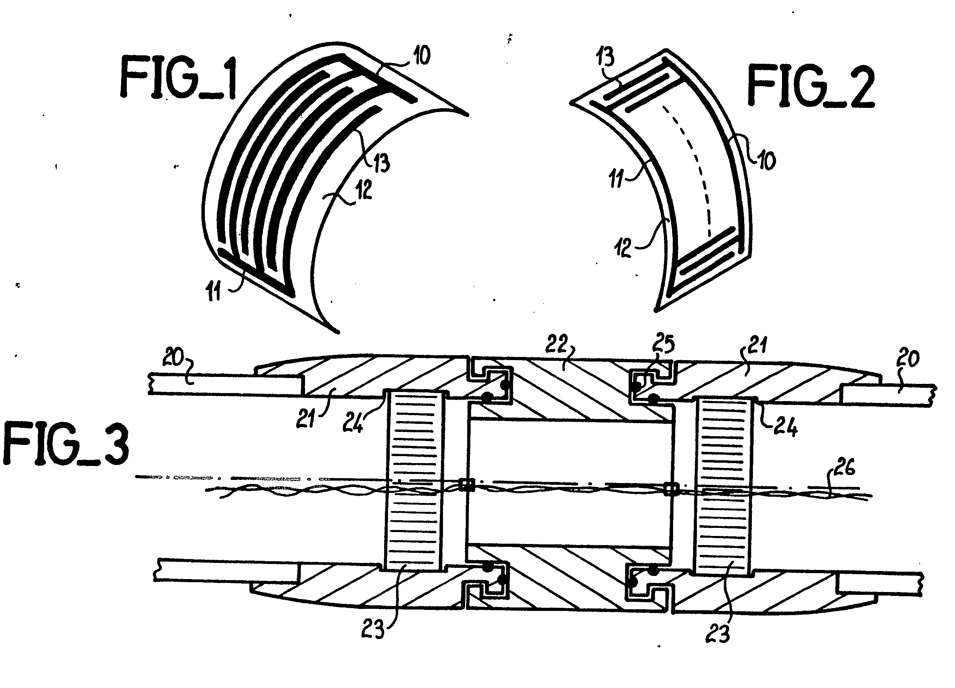

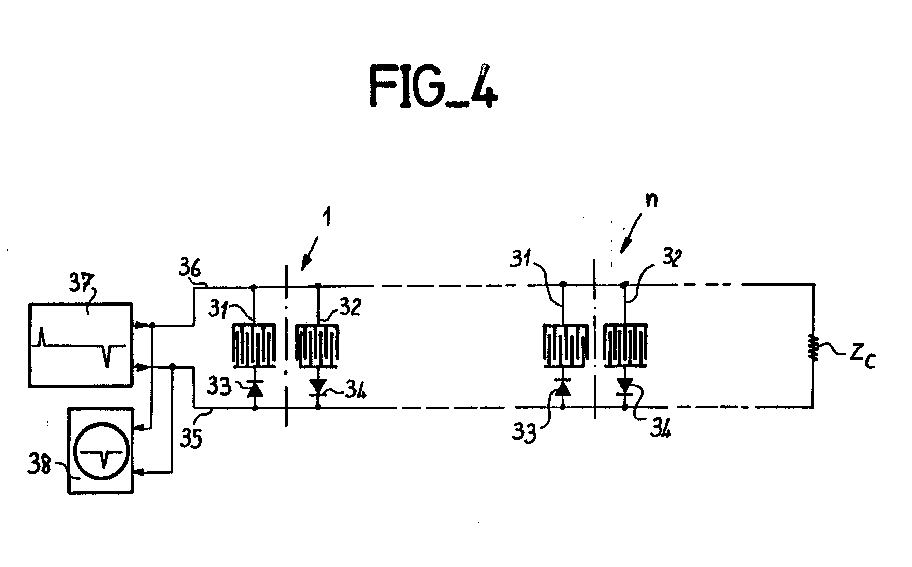

Une manière pratique de réaliser un capteur d'humidité consiste à fabriquer, selon les techniques connues des circuits imprimés, deux circuits en forme de peignes, comme représenté sur les figures 1 et 2. Ces circuits conducteurs 10 et 11 comprennent un ensemble de dents 13, imbriquées entre elles. Ils sont supportés par une feuille souple isolante 12 de forme rectangulaire. Cette feuille, et les circuits qu'elle supporte, peut être enroulée dans le sens de sa longueur de façon à former un bracelet en forme de cylindre permettant de la placer à l'intérieur d'une jonction de flûte. Selon la variante de la figure 1, les dents 13 sont disposées dans le sens de la longueur de la feuille, et donc de la circonférence du bracelet. Selon la variante de la figure 2, elles sont disposées dans le sens de la largeur de la feuille, et donc des génératrices du bracelet.

La largeur des dents est relativement quelconque. Il suffit qu'elle soit assez faible pour qu'il y ait plusieurs dents afin de multiplier les possibilités de court-circuit par l'eau, et assez forte pour éviter des ruptures intempestives. Une largeur de l'ordre du millimètre consitue une bonne moyenne. Par contre, l'intervalle entre les dents doit être relativement faible pour faciliter ces courts-circuits par l'eau sans risquer d'en provoquer d'autres sous les contraintes diverses, dûes à l'enroulement par exemple. Une valeur de l'ordre de quelques dixièmes de millimètres, par exemple 0,2 mm, est suffisante.

Une jonction de flûte comprend en général, comme représenté sur la figure 3, une pièce de raccordement 22 pour réunir de manière symétrique les deux raccords 21 fixés aux extrémités de deux tronçons dont on n'a représenté que la gaine souple 25. Des joints toriques d'étanchéité 25 permettent d'isoler le milieu intérieur (non aqueux et non conducteur) de la flûte, du milieu extérieur en formant une barrière au passage de l'eau entre la pièce 22 et les raccords 21.

Deux capteurs 23, conformes à la description précédente et enroules en forme d'anneau, sont placés dans deux evidements annulaires 24 pratiqués sur la face interne des raccords 21, à proximité des bouts de la pièce 22.

Ces emplacements constituent des points de passage obligés de l'eau lorsqu'elle franchit la barrière des joints 25 et pénètre le milieu intérieur de la flûte.

Une ligne bifilaire 26, de préférence torsadée et blindée, court le long de la flûte à l'intérieur de celle-ci. Les peignes des capteurs 23 sont reliés respectivement aux fils de cette ligne, par exemple par soudure sur des pastilles réservées lors de la gravure des peignes.

Le schéma électrique du dispositif est représenté sur la figure 4. La ligne 26 comprend deux fils 35 et 36 entre lesquels sont connectés des capteurs 31 (gauche) et 32 (droit) pour chaque jonction, dont on n'a représenté ici que la 1ère et la nième. Un générateur d'impulsions 37 permet d'envoyer à une extrémité (côté tracteur) de la ligne des impulsions électriques très brèves et périodiques dont la durée est inférieure au temps de propagation aller et retour entre 2 jonctions, et la période supérieure au temps de propagation aller et retour sur toute la longueur de la flûte et de ses connexions à l'appareillage de mesure.

La ligne est bouclée à son autre extrémité par une impédance $Z_c$ égale à son impédance caractéristique, compte-tenu de la charge représentée par les capteurs.

Selon le procédé connu de la reflectométrie, les impulsions se réfléchissent sur les discontinuités d'impédance situées le long de la ligne, et retournent vers le générateur 37.

Un oscillographe 38, par exemple, connecté en parallèle avec le générateur 37, permet de repérer les instants de départ et de retour des impulsions. On en déduit alors facilement la position des discontinuités réfléchissantes sur la ligne.

Les plus fortes de ces discontinuités sont dûes aux modifications d'impédance provoquées par le passage de l'eau d'infiltration sur les capteurs 31 et 32, qui provoque une variation de résistance et de capacite.

La précision de cette méthode n'est pas suffisante pour discriminer les deux capteurs d'une même jonction, ce qui est cependant nécessaire pour éviter le démontage du côté correct de la jonction.

Pour procéder à cette discrimination, on dissymétrise les capteurs droits des capteurs gauches des jonctions en les connectant à l'un des fils de la ligne respectivement par deux diodes 33 et 34 montées tête-bêche. En envoyant alors des paires d'impulsions de polarités inverses on peut reconnaître dans un écho correspondant à une jonction si c'est le capteur de gauche, ou celui de droite, qui est à l'origine de l'écho.

Comme on connait à l'avance les positions possibles des échos, et que la longueur des tronçons de la flûte est généralement grande, la précision sur la mesure temporelle peut être faible. Avantageusement, pour éviter des problèmes de lecture entre des échos forts et des échos faibles, on peut compenser l'atténuation due à la distance parcourue par le signal en effectuant une détection du signal de retour avec un seuil décroissant exponentiellement en fonction du temps. Cette décroissance est fixée pour maintenir un niveau sensiblement constant de précision pour les échos forts. Ce seuil peut être obtenu très simplement par la décharge d'un condensateur dans une résistance.

On a obtenu de bons résultats pour une flûte de modèle courant avec des impulsions de 80 ns de durée et de 15 V d'amplitude à l'émission.

**Revendications**

1. Dispositif de détection et de localisation d'entrée d'eau pour flûte marine, du type comprenant au niveau des raccords (21) d'extrémité des tronçons (20) de flûte des capteurs d'humidité formés d'une premier circuit électrique dont l'impédance varie sous l'effet de l'eau susceptible de pénétrer dans lesdits raccords et un second circuit électrique relié à ces capteurs pour détecter ces variations d'impédance, caractérisé en ce que ce second circuit électrique comprend une ligne bifilaire (35 - 36) s'étendant le long de la flûte, à laquelle sont connectés les capteurs (31, 32), une impédance ($Z_c$) égale à l'impédance caractéristique de la ligne pour boucler celle-ci à une extrémité, un ensemble de diodes (33, 34) pour connecter selon deux polarités distinctes les capteurs d'une même jonction à la ligne, des moyens (37) reliés à l'autre extrémité de la ligne pour émettre sur celle-ci des impulsions brèves de polarités alternées et des moyens (38) connectés à cette même extrémité pour détecter les échos de ces impulsions réfléchis par les capteurs dont l'impédance a varié sous l'effet de l'humidité et pour en outre séparer selon leur polarité les échos des capteurs d'une même jonction.

2. Dispositif de détection et de localisation d'entrée d'eau pour flûte marine, du type comprenant au niveau des raccords (21) d'extrémité des tronçons (20) de flûte des capteurs d'humidité formés d'un premier circuit électrique dont l'impédance varie sous l'effet de l'eau susceptible de pénétrer dans lesdits raccords et un second circuit électrique relié à ces capteurs pour détecter ces variations d'impédance, caractérisé en ce que ce second circuit électrique comprend une ligne bifilaire (35 - 36) s'étendant le long de la flûte, à laquelle sont connectés les capteurs (31, 32), une impedance ($Z_c$) égale à l'impédance caractéristique de la ligne pour boucler celle-ci à une extrémité, des moyens (37) reliés à l'autre extrémité de la ligne pour émettre sur celle-ci des impulsions brèves, et des moyens (38) connectés à cette même extrémité pour détecter les échos de ces impulsions réfléchis par les capteurs dont l'impédance a varié sous l'effet de l'humidité, cette détection s'effectuant avec un seuil décroissant exponentiellement en fonction du temps de retour des échos pour compenser l'atténuation due à leur trajet sur la ligne.

## Patentansprüche

1. Vorrichtung zur Erfassung und Lokalisierung eines Wassereintritts, für eine akustische Unterwasserantenne, mit Feuchtigkeitssensoren an den Enden der Kupplungsstücke (21) der Antennenabschnitte (20), bestehend aus einem ersten elektrischen Kreis, dessen Impedanz sich unter der Einwirkung von gegebenenfalls in die Kupplungen eindringendem Wasser verändert, und einem zweiten, an die Sensoren angeschlossenen elektrischen Kreis zur Erfassung der Impedanzänderungen; dadurch gekennzeichnet, daß der zweite elektrische Kreis entlang der Antenne eine zweiadrige Leitung (35, 36) aufweist, an die angeschlossen sind die Sensoren (31, 32), eine Impedanz ($Z_c$) in der Größe des Wellenwiderstandes der Leitung zum endseitigen Verschleifen derselben, eine Gruppe von Dioden (33, 34) zum Anschließen der Sensoren zweier verschiedener Polaritäten desselben Kupplungsanschlusses, Mittel (37), angeschlossen an das andere Ende der Leitung, zur Aussendung von kurzen Impulsen alternierender Polarität über die Leitung, und Mittel (38), angeschlossen an dasselbe Ende, zur Erfassung der von denjenigen Sensoren reflektierten Echos der Impulse, deren Impedanz sich durch die Einwirkung der Feuchtigkeit verändert hat, und zur Trennung der Echos der Sensoren desselben Kupplungsanschlusses nach Polaritäten.

2. Vorrichtung zur Erfassung und Lokalisierung eines Wassereintritts für eine akustische Unterwasserantenne, mit Feuchtigkeitssensoren an den Enden der Kupplungsstücke (21) der Antennenabschnitte (20), bestehend aus einem ersten elektrischen Kreis, dessen Impedanz sich unter der Einwirkung von gegebenenfalls in die Kupplungen eindringendem Wasser verändert, und einem zweiten, an die Sensoren angeschlossenen elektrischen Kreis zur Erfassung der Impedanzänderungen, dadurch gekennzeichnet, daß der zweite elektrische Kreis entlang der Antenne eine zweiadrige Leitung (35, 36) aufweist, an die angeschlossen sind die Sensoren (31, 32), eine Impedanz ($Z_c$) in der Größe des Wellenwiderstandes der Leitung zum endseitigen Verschleifen derselben, Mittel (37), angeschlossen an das andere Ende der Leitung, zur Aussendung von kurzen Impulsen über dieselbe, und Mittel (38), angeschlossen an dasselbe Ende, zur Erfassung der von denjenigen Sensoren reflektierten Echos der Impulse, deren Impedanz sich durch die Einwirkung der Feuchtigkeit verändert hat, wobei diese Erfassung unter Verwendung eines exponentiell mit der Rücklaufzeit der Echos abnehmenden Schwellwertes erfolgt, zum Ausgleich der bei ihrem Lauf über die Leitung erfolgten Dämpfung.

## Claims

1. A device for the detection and localization of an ingress of water, for an under-water acoustical antenna, of the type comprising humidity sensors placed at the junction ends (21) of the antenna sections (20), constituted of a first electrical circuit, the impedance of which varies under the influence of water susceptible of penetrating into said junctions, and of a second electrical circuit connected to these sensors for detecting the impedance variations, characterized in that the second electrical circuit comprises a bifilar line (35, 36) extending along the antenna, to which line are connected the sensors (31, 32), an impedance ($Z_c$) of equal value to the characteristic impedance of the line for looping the latter at on end, an assembly of diodes (33, 34) for connecting, according to two distinct polarities, the sensors of the same junction to the line, means (37) connected to the other end of the line for transmitting short pulses of alternating polarity along the line, and means (38) connected to this same end for detecting the echos of these pulses reflected by the sensors, the impedance of which has varied under the influence of humidity, and for separating, in addition, the echos of the sensors of a same junction according to their polarity.

2. A device for the detection and localization of an ingress of water, for an under-water acoustical antenna, of the type comprising humidity sensors placed at the junction ends (21) of the antenna sections (20), constituted of a first electrical circuit, the impedance of which varies under the influence of water susceptible of penetrating into said junctions, and of a second electrical circuit connected to these sensors for detecting the impedance variations, characterized in that the second electrical circuit comprises a bifilar line (35, 36) extending along the antenna, to which line are connected the sensors (31, 32), an impedance ($Z_c$) of equal value to the characteristic impedance of the line for looping the latter at one end, means (37) connected to the other end of the line for transmitting short pulses along the line, and means (38) connected to this same end for detecting the echos of these pulses reflected by the sensors, the impedance of which has varied under the influence of humidity, said detection being effectuated by application of a threshold, which decreases exponentially as a function of the return travel time of the echos in order to compensate the attenuation due to their passage along the line.

FIG_1

FIG_2

FIG_3

0 177 384

# FIG_4

0 177 384